# EUROPÄISCHE PATENTANMELDUNG

(11) **EP 3 127 886 A1**
(43) Veröffentlichungstag der Anmeldung: **08.02.2017**
(21) Anmeldenummer: 16181673.1
(22) Anmeldetag: 28.07.2016
(51) Int. Cl.: C04B 28/10, C04B 38/10, C04B 40/00, C04B 111/00, C04B 103/48, C04B 111/28, C04B 111/30, C04B 111/60

(54) **SCHÄUMUNGSMITTEL UND VERFAHREN FÜR DAS SCHÄUMEN UND STABILISIEREN EINER BAUSTOFFMAISCHE FÜR PORENLEICHTBAUSTOFFE**

(30) Priorität: 03.08.2015 DE 102015009827
(71) Anmelder: CellConTec GmbH, 38446 Wolfsburg (DE)
(72) Erfinder: Graf von der Schulenburg-Wolfsburg, Günzel, 38446 Wolfsburg (DE)
(74) Vertreter: Lins, Martina

(57) **Zusammenfassung**

Das Schäumungsmittel dient dem Schäumen eines Baustoff-Bindemittelleims oder einer Baustoffmaische zur Herstellung porenhaltiger Leichtbau- und Dämmmaterialien. Beim Aushärten der geschäumten Maische erzeugen die Schaumblasen Poren im Baustoff. Erfindungsgemäß wird zur Stabilisierung des aus dem Schäumungsmittel erhaltenen Schaums ein lang- oder mittelkettiger Polycarboxylatether (PCE) verwendet. Das Schäumungsmittel besteht aus einer schaumbildenden ionischen Tensid-Komponente, wenigstens einem Fettalkohol und wenigstens einem PCE in einem wässrig-organischen Lösemittel, das ausgewählt ist aus der Gruppe Alkylglykole, Alkylenglykole bis C6-Alkyl, Diglykole und Diglykolether, sowie optional bis maximal 20 Gew.-% bezogen auf die Mischung an weiteren Inhaltsstoffen. Weiterhin sind Verfahren zur Herstellung eines porenhaltigen Leichtbau- und Dämmmaterials mit Hilfe des Bindemittelleimschaums oder der geschäumten Baustoffmaische sowie zugehörige Porenleichtbauprodukte angegeben.

## Beschreibung

Die Erfindung betrifft die Verwendung neuer Stabilisatoren für die Schaumstabilisierung in einer geschäumten Baustoffmaische aus Bindemittel, Zugabewasser, einem Schäumungsmittel aus ionischen schäumenden Tensiden, in wässrigem Lösemittel mit einem Fettalkohol-Stützmittel und optional mit Additiven und Zuschlägen für die Herstellung von (Poren-) Leichtbaustoffen.
Die Erfindung betrifft weiterhin zugehörige Schäumungsmittel für das Schäumen eines Bindemittelleims oder einer Baustoffmaische und Verfahren zur Herstellung von porenhaltigen Leichtbau- und Dämmmaterialien, die sich hieraus nach erfolgtem Abbinden und Aushärten der geschäumten Maische ergeben. Weiterhin betrifft die Erfindung mit dem Verfahren erhältliche Porenleichtbauprodukte.

### Erfindungsgebiet

Das Arbeitsgebiet der Erfindung betrifft hydraulisch abbindende Baustoffe, deren Festigkeit durch Bindemittel bereitgestellt und durch Additive und Zuschläge verstärkt oder wie gewünscht eingestellt werden. Aus Bindemittel und Wasser (Anmach- oder Zugabewasser) wird ein Bindemittelleim hergestellt. Bestandteile des Bindemittels reagieren mit dem Wasser und binden dabei ab. Teilweise ergibt dies direkt den Baustoff, z.B. bei Füllgips und bestimmten Kalkputzen. Der Bindemittelleim bildet in diesem Fall direkt die Baustoffmaische. In anderen Fällen wird dem Bindemittelleim noch ein Zuschlag, meist Kies, Sand, Aschen oder Schlacken oder Additive in Form baustoffchemischer Zusätze zugegeben, um dem Baustoff mehr Festigkeit oder die gewünschten Eigenschaften zu verleihen. Der wasserhaltige Bindemittelleim mit Zuschlag und Additiven wird im Folgenden als Baustoffmaische bezeichnet. Die geschäumte aber noch nicht abgebundene Maische - eine viskose Maische - wird als geschäumte Maische bezeichnet. Diese bindet zu dem fertigen (Poren-)Leichtbaustoff ab.

Bei den Baustoffen im Sinne dieser Beschreibung kann es sich um Gips, Beton, Kalk oder Mischformen hiervon handeln. Die Bindemittel umfassen gelöschten Kalk, Gips als Natur- und REA-Gips und verschiedenste Zementarten, bevorzugt Portlandzement oder Tonerdeschmelzzemente.. Die Bezeichnung der Bindemittel Gips, Kalk und Zement umfasst üblicherweise auch solche Bindemittel, die in untergeordneter Menge ein anderes Bindemittel oder weitere zusätzliche pulverförmige mineralische Bestandteile, z.B. anorganische Oxide (Mg, Si, Fe) umfassen.

Die Rheologie und das Abbindeverhalten von Baustoffmischungen sind insbesondere für Beton und Gips zwar vielfältig untersucht, aber aufgrund der zahlreichen Kombinationsmöglichkeiten von sehr vielen Faktoren abhängig und deshalb nicht abschließend betrachtet. Die Anzahl der Kombinationen mit Zuschlägen und Additiven erschwert abschließende Untersuchungen. Zudem besteht häufig eine beträchtliche Abhängigkeit von Verarbeitungstemperatur und -druck. Außerdem sind Baustoffe Naturstoffe, die natürlichen Schwankungen unterliegen, weshalb selbst bei identischen Mischungen Variationen der Ergebnisse möglich sind.

Leichtere und besser wärme- und kälteisolierende Baustoffe sind seit langem als sogenannte Leicht- oder Porenbaustoffe bekannt, die aufgrund von Lufteinschlüssen oder Beigabe leichter Zuschläge wie Perliten, Blähton, Bims oder Zellulose, von geringerer Dichte sind. Nachteilig im Vergleich zu Lufteinschlüssen ist der häufig hohe Preis der Zuschläge, deren beschränkte Verfügbarkeit und ihr oft negativer Effekt auf die Isolier- oder Schalleigenschaften des Baustoffs.

Aus der EP 0 568 752 A1 ist ein Leichtgips bekannt, der hergestellt wird, indem einem Gipsbaumaterial ein mineralisches, poröses Füllmaterial und vorzugsweise ein Perlit zugesetzt wird. Durch die Poren des Füllmaterials ergibt sich ein Baumaterial mit gegenüber massivem Gips niedrigerer, einstellbarer Dichte.

Gipse werden industriell vielfältig verwendet, unter anderem als Bau- und Modelliermaterialien, als Dämmstoffe, als Abformmassen und für medizinische Zwecke. Gipse besitzen häufig erwünschte Verarbeitungseigenschaften wie gute Formbarkeit und Modellierbarkeit vor dem Abbinden und gute Nachbearbeitbarkeit und Schleifbarkeit nach dem Abbinden. Sie bieten für viele Zwecke das gewünschte Maß an Festigkeit, sind relativ kostengünstig und gut verfügbar. Chemisch handelt es sich um Kalziumsulfate, die in verschiedenen Modifikationen sowohl natürlich vorkommen wie auch synthetisch hergestellt werden können. Das Dihydrat (CaSO₄·2H₂O) gibt beim Erhitzen Kristallwasser ab und geht dabei zunächst in ein Hemihydrat und später in ein Anhydrit über. Die wenigstens teilweise dehydratisierten Gipsformen können Wasser wieder aufnehmen und dabei rekristallisieren. Nicht vollständig hydratisierter Gips kann daher unter Wasseraufnahme abbinden.

Heutige Anforderungen im Bauwesen erfordern von Baumaterialien geringes Gewicht (geringe Transportkosten, einfache Verarbeitung), gute Wärme- und Kälteisolierwerte (Energieeinsparung), sowie verbesserte Schallisolierung (Wohnkomfort, Gesundheit). Grundlage hierfür sind leichte Baustoffe aus denen diese Produkte hergestellt werden können. Um das Gewicht etablierter Baustoffe zu reduzieren und so die geforderten Eigenschaften zu erhalten, kann im Herstellungsprozess der Baustoffmaische dauerhaft Luftporen zugeführt werden. Eingesetzte Bindemittel werden so mit Eigenschaften oder Kombinationen von Eigenschaften ausgestattet, dass Produkte hergestellt werden können, die gegenwärtig im Markt nicht verfügbar sind. Etablierte Produkte können mit Hilfe eines stabilen Porengefüges stark verbessert oder mit neuen Eigenschaften ausgestattet werden. Neben der Nutzung in der industriellen Fertigung, ist es wünschenswert das Material auf der Baustelle herstellen und verbauen zu können. Die geschäumte Maische sollte dabei stabil und prozessfähig, in der gewünschten Dichte herstellbar und ohne Dichteverlust förderfähig und verarbeitbar sein.

Die DE 20 56 255 A1 offenbart ein Schäummittel für Gips- und Zementmassen in dem als Tenside Alpha-Olefinsulfonate und/oder bestimmte Alkali-, Ammonium- oder Ethanolaminsalze von Schwefelsäureestern von oxalkylierten Alkoholen verwendet werden. Weiterhin können zusätzliche Stabilisatoren, insbesondere Fettalkohole, und Glykole als Kälteschutzmittel zugesetzt werden. Diese Stabilisierung genügt teilweise für Baustoffmaischen, wenn sie keinem oder geringem Druck ausgesetzt werden, nur in geringer Aufbauhöhe ausgebracht werden oder geringe Temperaturschwankungen am Verbaupunkt zu erwarten sind. Das Porengefüge im Gipsleim kann jedoch bei erhöhtem Druck, stärker dimensionierter Aufbauhöhe oder stark erhöhten Temperaturen am Verbaupunkt versagen.

### Aufgabe der Erfindung

Schaumbildner für Gips und Beton sind bislang nicht für alle Anwendungen zufriedenstellend, da die geschäumte Baustoffmaische spontan zusammenfallen kann oder beim Pumpen oder Transportieren die eingestellte Dichte nicht gehalten werden kann.

Die Aufgabe der Erfindung besteht darin, die Nachteile des Standes der Technik bezüglich Schaumstabilität zu überwinden und ein Schäumungsmittel zur Herstellung von offen- oder geschlossenporigen Leichtbaustoffen, bzw. allgemein ein Poren aufweisendes Leichtbau- und Dämmmaterial zur Verfügung zu stellen, wobei die noch nicht ausgehärtete geschäumte Baustoffmaische unter Verarbeitungsbedingungen stabil bleibt.

Das Schäumungsmittel ist in diesem Sinne zugleich als Porenbildner für den ausgehärteten Baustoff aufzufassen.

Weiterhin sollte die geschäumte Maische bei mechanischer Beanspruchung, also beim Pumpen, Absenken oder bei Aufbauhöhen über 10 cm im Wesentlichen volumenstabil bleiben, ohne dabei Inhomogenitäten zu entwickeln. Beim Fördern mittels geeigneter Pumpen (besonders: Schlauch- und Schneckenpumpen) soll der Baustoffschaum ohne wesentlichen Dichteverlust am Verbaupunkt ankommen und bis zum vollständigen Abbinden stabil bleiben und keine Instabilitäten oder Inhomogenitäten entwickeln.

Das Verfahren zur Herstellung der Leichtgipse und Gipsschäume soll auf alle Reingipse, Baugipse, REA-Gipse (alpha und beta Halbhydrate) und Gipsmischungen anwendbar sein. Zusätzlich sind weitere pulverförmige mineralische Baustoffe, einschließlich kalk-, kalkstein-, zement- und/oder kieselsäurehaltiger Baustoffe, auch im Gemisch mit Gips und gegebenenfalls weiterer Zuschläge, verarbeitbar, d.h. mit dem Verfahren schäumbar.

### Zusammenfassung der Erfindung

Die Erfindung stellt ein neues Schäumungsmittel zur Verfügung, das gegenüber den aus dem Stand der Technik bekannten Mitteln stark stabilisiert ist. Die Standzeiten mit dem Schäumungsmittel bzw. dem Porenbildner erhaltener Bindemittelleimschäume und Baustoffmaischenschäume sind auch bei höheren Temperaturen, zeitlich verzögerter Aushärtung und unter Druck ausgezeichnet. Die geschäumten Maischen sind als solche pumpfähig und ihr Volumen bleibt erhalten, so dass sie bei einer üblichen Behandlung auf dem Bau oder in der Formkörperherstellung zu porenhaltigen Leichtbau- und Dämmmaterialien aushärten können. Dies gilt allgemein für hydraulisch aushärtende Baustoffe. Das neue Schäumungsmittel ist in Kombination mit verschiedensten Bindemitteln und Bindemittelmischungen, einschließlich Gips, Kalk, Zement, anwendbar.

Im Einzelnen wird die Aufgabe durch die neue Verwendung eines lang- oder mittelkettigen Polycarboxylatethers zur Schaumstabilisierung eines Schäumungsmittels für Baustoffe nach Anspruch 1 gelöst, durch ein Schäumungsmittel für das Schäumen eines Baustoff-Bindemittelleims oder einer Baustoffmaische zur Herstellung porenhaltiger Leichtbau- und Dämmmaterialien nach Anspruch 4, durch die mit dem Schäumungsmittel zu verwirklichenden Verfahren nach Ansprüchen 7 und 9 und damit erhaltene Porenleichtbauprodukte nach Anspruch 15.

Der Erfindung liegt die Erkenntnis zugrunde, dass Polycarboxylatether (PCE) Schäume aus einem Schäumungsmittel für die Herstellung porenhaltiger Leichtbau- und Dämmmaterialien - nämlich Bindemittelleimschäume und geschäumte Baustoffmaischen - in hervorragender Weise stabilisieren. Insbesondere Schäumungsmittel auf der Basis ionischer schäumender Tenside werden atabilisiert.

Polycarboxylatether (PCE) sind Kammpolymere, wie durch Formel (I) beispielhaft für eine einfache Polymereinheit wiedergegeben.

Formel (I) [-CH₂-C(CH₃)(COONa)-CH₂-C(CH3)(COOCH₂(EO)ₙ-]

Sie sind als Grundstoffe für Fließmittelformulierungen für Beton bekannt und können in Struktur, Molekulargewicht, Ladungsdichte, Kettenlängen von Haupt- und Seitenketten usw. sehr vielfältig modifiziert werden, um die Wirkung in Bezug auf die Anwendung zu optimieren. Die PCE-Hauptketten tragen negative Ladungen, die - wie man annimmt - eine Anlagerung an die Zuschlagspartikel erleichtern, während die Seitenketten in die Leimlösung ragen. Bei der Erfindung werden lang- und mittelkettige PCE verwendet, hierunter werden solche mit wenigstens 10 Carboxylateinheiten je Molekül verstanden.

Im Rahmen dieser Erfindung werden alle für Betonfließmittel angebotenen und verwendbaren lang- oder mittelkettigen Polycarboxylatether beansprucht, die sämtlich auch für die Zwecke dieser Erfindung geeignet sind. Dabei liegt das PCE immer direkt im flüssigen oder getrockneten Schäumungsmittel, also in direkter Zuordnung zu dem zu stabilisierenden Tensid, vor, d.h. mit diesem gemischt bzw. in gleicher Lösung (nämlich im Schäumungsmittel), während der PCE bei der bekannten Verwendung als Fließmittel-Additiv in Mengen von ab 0,1 % bezogen auf den Bindemittelgehalt, also in hohen Gewichtsanteilen, dem Bindemittel oder dem Anmachwasser für den Leim zugegeben wird. In dieser bekannten Verwendungsform wirkt der PCE jedoch nicht schaumstabilisierend.

Die durch die erfindungsgemäße Verwendung stabilisierten Schäumungsmittel sind solche, wie sie alternativ zu porösen Füllstoffen schon seit langem bekannt sind, jedoch nur in Einzelfällen praktikabel eingesetzt werden konnten, nämlich Schäumungsmittel auf Basis ionischer schäumender Tenside in wässrigen organischen Lösungsmitteln, im Allgemeinen in Wasser-Alkohol-Mischungen, insbesondere Wasser-Glykol-Mischungen. Es ist wesentlich, dass als Tenside stark schaumbildende Tenside eingesetzt werden. Der damit erzeugte Schaum wird häufig mit Stützmitteln, beispielsweise Fettalkoholen, zusätzlich gefestigt.

Der Gehalt des Polycarboxylatethers (PCE) in dem noch nicht mit einer Baustoffkomponente vereinigten Schäumungsmittel beträgt vorzugsweise wenigstens 0,1 Gew.-% bis vorzugsweise nicht über 12 Gew.-%, kann aber auch darüber liegen, da keine Überdosierung im Schäummittel auftritt, jedoch höhere Konzentrationen keine verbesserte Stabilisierung mehrt erzielen. Die kommerziell erhältlichen Polycarboxylatether liegen in wässrigen Lösungen vor. Der Feststoffgehalt liegt dabei üblicherweise zwischen 25 und 60 Gew.-%. Die Gew.-% Angaben für das Schäumungsmittel beziehen sich auf den PCE-Feststoffanteil der vom Hersteller für das Produkt angegeben ist (= Substanzgehalt bzw. Feststoffgehalt).

Das Verhältnis von wässrigem PCE zu Tensid liegt vorzugsweise zwischen 1:40 und 1:1, vorzugsweise zwischen 1:4 und 1:1.

Bevorzugt wird der Polycarboxylatether für die Verwendung zur Stabilisierung des Schäumungsmittelschaums in Kombination mit wenigstens einem Glykol und wenigstens einem Fettalkohol eingesetzt, die unten noch näher beschrieben werden. Dabei beträgt das Verhältnis Fettalkohol:PCE vorzugsweise von 4:1 bis 1:6 und das Verhältnis von PCE:Glykol von 1:40 bis 60:1.

Das in diesem Zusammenhang zur Erfindung gehörige gattungsgemäße Schäumungsmittel besteht aus den Grundbestandteilen:
- wenigstens ein ionisches schaumbildendes Tensid, vorzugsweise in einem Substanzgehalt von wenigstens 2 Gew.-% am Schäumungsmittelgemisch, optimal etwa 4 bis 10 Gew.-%, jedoch gegebenenfalls - anwendungsabhängig - auch in deutlich höherem Anteil,
- wenigstens ein Lösemittel aus der Gruppe niederer Glykole, einschließlich Alkylglykolen, Alkylenglykolen und Di-, Tri- und Polyglykolen, vorzugsweise mit bis zu 12 Kohlenstoffatomen je Molekül und besonders bevorzugt ausgewählt aus der Gruppe Alkylglykole und Alkylenglykole bis C6-Alkyl, Diglykole und Diglykolether,
- ein Polycarboxylatether, einschließlich gemischter Polycarboxylatether, vorzugsweise mit wenigstens 10 Carboxylateinheiten je Molekül,
- wenigstens ein Fettalkohol oder Fettalkoholgemisch,
- Wasser und gegebenenfalls ein gewisser Anteil anderer organisch-chemischer Zusatzstoffe und/oder Säure oder Base zur pH-Wert-Einstellung.

Der Gehalt an wässrig-organischem Lösemittel, d.h. Wasser-Glykol-Gemisch, ist so einzustellen, dass sich alle Bestandteile gut lösen. Die Verhältnisse und Gewichtsangaben sind Anhaltspunkte für den Fachmann. U.a. hängt die Lösekraft von der Temperatur ab, so dass auch die spätere Verarbeitungstemperatur für die Wahl der Gewichtsverhältnisse eine Rolle spielen kann; diese Zusammenhänge sind dem Fachmann bekannt und die Schäumungsmittel-Zusammensetzungen können wie üblich optimiert werden.

Die Zusatzstoffe bzw. Additive, einschließlich Säuren und Basen zur pH-Wert-einstellung (auch anorganische), sind in einem Anteil von 0 bis nicht mehr als 20 Gew.-% vorhanden. Sie sind für manche Schäumungsmittel nicht erforderlich. Vorzugsweise ist daher ihr Gehalt so gering wie möglich, d.h. vorzugsweise 0 - 10 Gew.-%, weiter vorzugsweise 0 - 5 Gew.-%, weiter vorzugsweise 0 - 3 Gew.-% und besonders bevorzugt 0 - 2 Gew.-%.

Als Tenside sind grundsätzlich stark schäumende alkalistabile oder selbst alkalisch reagierende Tenside geeignet. Dabei kommt es in erster Linie auf eine hohe Schäumkraft an. Bevorzugt sind anionische Tenside und insbesondere Sulfonate, Alkylsulfonate, insbesondere Alkalialkyfsulfonate, Alkylensulfate oder Alkylethersulfonate. Die Alkylketten oder Alkylenketten der Sulfonate und Sulfate sind vorzugsweise langkettig und weiter vorzugsweise unverzweigt. Kettenlängen größer oder gleich C8 und vorzugsweise zwischen C10 und C20 können als typisch angesehen werden.

Bevorzugte Tenside umfassen u. a. lineare Alkylatsulfonate, Alphaolefinsulfonate, Betaolefinsulfonate, Alkylethersulfate, ethoxylierte Alkylphenole. Derzeit bevorzugt sind Alphaolefinsulfonate, z.B. Natrium C14-16-Olefin-Sulfonat, und unter den Alkylsulfaten SDS und SLS.

Weitere verwendbare anionische Tenside sind Acylaminosäuren und deren Salze, unter anderem Acylglutamate, wie zum Beispiel Natriumacylglutamat, Di-TEA-palmitoylaspartat, Natriumcaprylic/Capric Glutamat oder Natriumcocoylglutamat, Acylpeptide, einschließlich hydrolysierter Proteine und Proteinfraktionen, Sarcosinate, Taurate, Acyllactylate, Alininate, Arginate, Valinate, Prolinate, Glycinate, Aspartate, Propionate, Lactylate, Amidcarboxylate, Ferner kommen Phosphate/Phosphonate in Betracht. Weitere Beispiel sind Sulfosuccinate, Natriumcocomonoglyceridsulfat, Natriumlaurylsulfoacetat oder Magnesium PEG-n-Cocoamidsulfat, Alkylarylsulfonate und Acyl-isethionate, Ether- und Ester-Carbonsäuren, vorzugsweise der Fettsäuren, sowie weitere bekannte schäumende anionische Tenside, wie sie kommerziell erhältlich sind.

Es ist vorgesehen, dass das ionische schaumbildende Tensid wenigstens ein anionisches Tensid beinhaltet oder daraus besteht. Es kann ein einzelnes Tensid oder eine Mischung aus mehreren Tensiden eingesetzt werden. Solange die Schaumkraft erhalten bleibt, kann in einer Mischung neben wenigstens einem anionischen Tensid wenigstens ein anderes, insbesondere nichtionisches Tensid enthalten sein, was jedoch nicht bevorzugt ist.

Das Lösemittel aus der Gruppe der Glykole ist bevorzugt ausgewählt aus Ethyl-englykol, Propylenglykol, Hexylenglykol, Butylenglykol, Butyldiglykol, Diethyl-englykol, Dipropylenglykol, Diethylenglykolalkylether mit C1-C5-Alkyl, Dipropylenglykolalkylether mit C1-C5-Alkyl, oder Mischungen daraus. Das Lösemittel bringt alle Bestandteile des Schäumungsmittels gemeinsam in Lösung und bildet mit dem in dem Schäumungsmittel vorhandenen Wasser eine Mischphase. Tensid, PCE und gegebenenfalls weitere Inhaltsstoffe liegen in einer wässrigglykolischen Lösung vor. Das Glykol liegt in dem Schäumungsmittel vorzugsweise mit ca. 10 bis 30 Gew.-% vor, vorzugsweise mit ca. 15 - 25 Gew.-%, weiter vorzugsweise mit ca. 18 - 22 Gew.-%.

Grundsätzlich enthält das Mittel einen stützenden Fettalkohol, wie schon aus dem Stand der Technik nach DE 20 56 255 A1 und DE 38 07 250 A1 bekannt. Das dort genannte Dodecanol kann auch bei dieser Erfindung eingesetzt werden. Allgemein sind langkettige Fettalkohole mit einer Kettenlänge von C8 - C24 und vorzugsweise C10 bis C20 gut geeignet. Fettalkohole enthalten definitionsgemäß lineare oder wenig verzweigte gesättigte oder ein- oder mehrfach ungesättigte Kohlenwaserstoffketten. Kommerziell erhältliche Fettalkohole sind häufig natürlichen Ursprungs und bestehen häufig aus Gemischen, zu denen die durchschnittliche Kettenlänge angegeben wird. Die oben angegebenen Kettenlängen sind im Falle von Gemischen als Durchschnittslängen anzusehen. Der Fettalkohol, hier als Stützmittel bezeichnet, wirkt mit dem Tensid zusammen, löst dieses zunächst und sorgt innerhalb der Baustoff-Maischen-Struktur für die Stabilität der einzelnen Poren oder Luftblasen, die jedoch für längere Standzeiten zusätzlich stabilisiert werden müssen. Hier durch das PCE.

Das Schäumungsmittel enthält immer, auch als Konzentrat, einen gewissen Wasseranteil. Der Verdünnungsgrad ist jedoch flexibel. So kann es beispielsweise gewünscht sein, das tensidhaltige Mittel möglichst konzentriert vorliegen zu haben, um Transport- und Verpackungskosten für die Überführung zum Einsatzort zu verringern. Andererseits kann es für bestimmte Zwecke vorteilhaft sein, das für das Anmachen des Bindemittels erforderliche Wasser bereits in einer Zubereitung mit dem tensidhaltigen Aufschäummittel nach dieser Erfindung vorliegen zu haben, z. B. um dem Anwender mehrfaches Abmessen beim Vermischen zu ersparen und einen sofortigen Einsatz am Einsatzort zu ermöglichen. Der Wassergehalt des Mittels kann auch zur Einstellung des pH-Wertes genutzt werden. Es sind die verschiedensten Verdünnungsgrade für das tensidhaltige Mittel möglich. Der Wassergehalt sollte wenigstens 10 Gew.-% des Schäumungsmittels ausmachen.

Für bestimmte bevorzugte Ausführungsformen wird das Volumen des Grund-Schäumungsmittels oder -Konzentrats auf sein bis zu 25faches Volumen weiter mit Wasser verdünnt bevor es aufgeschäumt wird.

Der pH-Wert des tensidhaltigen Mittels, das entweder als solches in Form der angegebenen Mischung eingesetzt und hierfür gegebenenfalls vorher aufgeschäumt wird oder dessen Einzelbestandteile der Gesamtmischung an geeigneter Stelle des zugehörigen Herstellungsverfahrens zugemischt werden, beträgt bevorzugt größer oder gleich pH 6, besonders bevorzugt ist der pH alkalisch, d.h. größer 7. Für viele Anwendungen kann der pH-Wert günstig auf Werte von 6 bis 13, bevorzugt von 9 bis 12 eingestellt werden. Hierfür kann dem Mittel falls erforderlich Lauge (vorzugsweise Alkalilauge, NaOH oder KOH) zugesetzt werden.

Das Schäumungsmittel kann auch weitere Zusatzstoffe enthalten, hierzu gehören Additive, einschließlich pH-Regulatoren und ergänzende Lösemittel, die jedoch nur in untergeordneter Menge beigefügt sein sollten.

Additive können sein: Verzögerer, Beschleuniger, Farbstoffe, Fließmittel, Wasserglas, Kieselsäure, Alkalisalze und andere bekannte Additive der Beton-, Kalk- und Gipsindustrie.

Ergänzende Lösemittel können beispielsweise C1-C20 Monoole oder Ester sein. Beispielsweise können Butylacetat oder Acetylacetat, Methanol oder Ethanol als zusätzliches Lösungsmittel in geringerer Menge vorhanden sein.
Es ist jedoch bevorzugt, dass das Schäumungsmittel im Wesentlichen aus den beanspruchten und oben genannten Bestandteilen besteht.
Soweit erkennbar kommt es für die Herstellung des Schäumungsmittels nicht auf eine besondere Mischungsreihenfolge an.

Ein besonderer Aspekt der Erfindung besteht darin, dass das Schäumungsmittel - insbesondere sein Konzentrat bzw. eine wenig verdünnte Ausführungsform - gefriergetrocknet oder im Vakuum eingedampft und so in einen trockenen Zustand überführt werden kann. Das gefriergetrocknete oder in sonstiger Weise eingedampfte Schäumungsmittel kann besonders gut gelagert und transportiert werden. Es kann auch direkt dem Bindemittel zugemischt werden und so einen selbstschäumenden Bindemittelmix ergeben, bei dem sich im Mischer die Luftporen ohne weitere Zugabe von Schäummitteln entwickeln. Das getrocknete Schäumungsmittel kann auch jederzeit in Wasser aufgelöst und wie das vorstehend ausführlich beschriebene flüssige Schäumungsmittel weiterverwendet werden. Wenn man die Trocknung unvollständig durchführt, erhält man ein Pulver, die in Dosen oder Tuben aufbewahrt werden kann und ebenfalls ausgezeichnet gelagert und transportiert werden kann.

Die Erfindung umfasst weiter verschiedene Verfahren zur Herstellung von porenhaltigen Leichtbau- und Dämmmaterialien, die mit Hilfe des erfindungsgemäß mit PCE optimal stabilisierten Schäumungsmittels erhalten werden können.

Bei einer ersten Verfahrensführung wird grundsätzlich aus einem Bindemittelleim aus den Bestandteilen Bindemittel, Anmachwasser und Schäumungsmittel sowie optional Additiven oder Zuschlägen für den speziellen Baustoff ein Bindemittelleimschaum erzeugt, der wie gewohnt zu dem porenhaltigen Baustoff weiterverarbeitet wird. Im Falle von Gips, dem nicht in jedem Fall Zuschläge zugegeben werden, kann der Bindemittelleimschaum zugleich der fertige Bauschaum sein, der zum Aushärten und Trocknen gelangt - Bindemittelleim ist in diesem Fall gleich Baustoffmaische.

Bei einer zweiten Verfahrensführung wird grundsätzlich aus einer Baustoffmaische aus den Bestandteilen Bindemittelleim, Zuschlägen, Additiven, ggf. weiterem Zugabewasser und Schäumungsmittel sowie optional Additiven für den speziellen Baustoff ein Baustoffmaischenschaum erzeugt, der wie gewohnt zu dem porenhaltigen Baustoff, z.B. einem Beton, weiterverarbeitet wird.

Das Schäumungsmittel wird entweder in einem ersten Schritt mit Wasser oder dem bereits im Schäumungsmittel enthaltenen Wasser zu einem Schäumungsmittel-Schaum geschäumt. Dies geschieht beispielsweise in einem Schaumgenerator. Vorrichtungen hierfür sind dem Fachmann bekannt. Der Schaum aus dem Schäumungsmittel kann dann in die Baustoffverarbeitung eingeführt werden wie unten näher beschrieben, um die gewünschten Baustoffschäume zu ergeben. Sowohl flüssiges als auch getrocknetes Schäumungsmittel können auf diese Weise verwendet werden.

In bevorzugten Ausführungsformen wird das Schäumungsmittel, optional mit zusätzlichem Wasser, aufgeschäumt und der so erhaltene Schaum wird entweder
1. mit Anmachwasser für ein Bindemittel,
2. mit einem Bindemittelleim aus Bindemittel und Anmachwasser sowie optional Additiven oder
3. mit einer Baustoffmaische aus dem Bindemittelleim und Zuschlägen vereinigt,
um den Bindemittelleimschaum oder die fertige geschäumte Baustoffmaische zu ergeben. Der Schaum aus dem Schäumungsmittel kann dabei innerhalb eines Bindemittelleim-Zubereitungsverfahrens vorteilhafterweise wenigstens einem der Ausgangsstoffe in einem Behälter zugegeben oder in eine Überführungsleitung, in einen Mischer oder Schaumgenerator, in eine Pumpe oder eine Frischbaustoff-Abgabeleitung zugeführt werden.

Alternativ ist es insbesondere für Gips als Bindemittel möglich, dem gipsbasierten Feststoffmix ein getrocknetes Schäumungsmittel zuzugeben und den Gips wie üblich zu verarbeiten. Das Aufschäumen erfolgt in diesem Fall durch intensives Mischen von Gips und Anmachwasser.
Konkret wird das trockene, pulverförmige oder pastöse Schäumungsmittel einem trockenen Bindemittel oder dem Anmachwasser zugegeben, und der Bindemittelleimschaum wird direkt beim Mischen des Bindemittels mit dem Anmach- bzw.

Zugabewasser erzeugt und in üblicher Weise weiterverarbeitet.

Alle Verfahrensvarianten, wie sie unten im Zusammenhang mit den Figuren am Beispiel Gips noch näher erläutert werden, sind grundsätzlich für den Einsatz mit unterschiedlichen Bindemitteln geeignet, wobei Varianten porenhaltiger Leichtbau- und Dämmmaterialien sowie zugehörige Produkte erzeugt werden. Wie oben schon beschrieben, besteht das Bindemittel für das erfindungsgemäße Verfahren vorzugsweise aus Zement, Gips, Kalk, jeweils allein oder in beliebiger Mischung untereinander oder mit anderen mineralischen Bestandteilen.

Das erfindungsgemäße Verfahren umfasst die Möglichkeit, den Bindemittelleimschaum oder die geschäumte Baustoffmaische, bzw. allgemein den Baustoffschaum, direkt an den Verbaupunkt zu transportieren, vorzugsweise zu pumpen, und vor Ort aushärten zu lassen. Wenn das Bindemittel in der geschäumten Baustoffmaische Portlandzement oder Tonerdeschmelzzement ist, kann dieses Material im Straßenbau eingesetzt werden und dort, Kies- und Schotterschichten, Frostschutzschichten, hydraulisch gebundene (Trag-)Schichten, sowie Teile des Asphaltaufbaus ersetzen.

Die geschäumte Baustoffmaische kann auch in Hohlräume eingebracht werden und so mit anderen Baustoffen ein Verbundmaterialsystem ergeben. Dies ist besonders vorteilhaft für Fußboden- oder Fassadendämmungen, vor allem, wenn diese nachträglich ausgeführt werden sollen, also im Bereich der Bausanierung. Insbesondere ist das erfindungsgemäße Porenleichtbau- und Dämmmaterial gut geeignet, für Dämm- und Ausgleichsmaterialien in Boden, Dach und Wand), für Estriche und darunter liegende Bodenausgleichsmassen, für Deckenund Wandputze.

Die nach den verschiedenen Verfahrensvarianten der Erfindung erhaltene geschäumte Baustoffmaische ist unter Verarbeitungsbedingungen stabil, d.h. er lässt sich in fahrbaren Mischern transportieren, mit geeigneten Pumpen durch Schläuche und Rohrleitungssysteme pressen, für Formprodukte in Formen überführen oder als Dämm-Material in Zwischenräume oder auf Böden einbringen, ohne dass sich seine Dichte im Prozess erhöht.

Das Verfahren umfasst jedoch auch die Möglichkeit, den Baustoffschaum in Form zu gießen und so Formkörper, insbesondere Bauelemente, zu erzeugen.

Bei der Fertigung von Gipskartönplatten kann das Schäumungsmittel durch verstärkte Bildung stabiler Luftporen das Gewicht des Endproduktes erheblich reduzieren und helfen die Biegezugfestigkeit der Platten zu erhöhen. Dies kann auch im Verbund mit weiteren Zuschlagstoffen geschehen.

In einer besonders bevorzugten Ausführungsform geschieht das Ausformen und Aushärten unter Druck und erhöhter Temperatur in einer Autoklave, bzw. in einer Form, die die Bedingungen einer Autoklave bereitstellt. Dieses Verfahren ist unter anderem sehr vorteilhaft für die Herstellung mechanisch sehr stabiler Porenleichtgips-Formkörper und Produkten aus autoklaviertem Gasbeton (YTONG).

In einer weiteren bevorzugten Ausführungsform ist es möglich, mit einem der vorstehenden Formverfahren Blöcke herzustellen, aus denen durch eine Nachbearbeitung weitere Produkte entstehen. Insbesondere ist vorgesehen, dass mit dem erfindungsgemäßen Verfahren erhaltene geformte oder frei gegossene Blöcke aus Leichtbau- und Dämmmaterialien zu Produkten wie Leichtbauplatten, Innen- und Außenisolierelementen, insbesondere Fassadendämmungen und Paneelen, oder Formsteinen und Formelementen, geschnitten, gesägt oder gefräst werden.
Wird dieses Verfahren mit Material höherer Dichte durchgeführt, so dass die geforderten Festigkeiten einstellen, so können mit dem Verfahren Mauerwerkssteine unterschiedlichster Klassen hergestellt werden.

Wie erkennbar ist durch das Verfahren eine Vielzahl von Porenleichtbauprodukten zugänglich, bevorzugt aus Leichtgips bzw. Porengips oder aus Leichtbeton bzw. Porenbeton.

### Gips

Verfahren und Schäumungsmittel (Porenbildner) sind anwendbar bei allen Gipsarten, d. h. Dihydrat, Hemihydrat und Anhydrit in den verschiedenen Modifikationen, natürlichen oder synthetischen Ursprungs, einschließlich aller REA-Gipse, insbesondere alpha- und Betahalbhydraten. Alle Gipse können die für die Verwendungszwecke üblichen Gipszuschläge enthalten, d. h. Baugips kann beispielsweise (gemahlenen) Kies, Sand, Kieselsäureprodukte, Abbindeverzögerer und -beschleuniger oder dergleichen enthalten. Es ist jedoch vorgesehen, dass der Gipsanteil bezogen auf die Trockenmasse vorzugsweise wenigstens 12,5 Gew.-%, weiter vorzugsweise wenigstens 80 Gew.-% und besonders bevorzugt 100 Gew.-% beträgt. Das Verfahren ist ebenfalls sehr gut bei reinem Gips anzuwenden. Bevorzugt wird das Verfahren mit möglichst zuschlagfreiem Gips ausgeführt, da sich bei geringen Dichten des Endprodukts dessen die größtmögliche Druckfestigkeit ergibt.

Mittel und Verfahren nach der Erfindung führen zu stabilen Gipsschäumen auch mit geringer Rohdichte (< 500 kg/m³). Daraus hergestellte Leichtgipsprodukte verfügen über hohe Wärmeisolierwerte. Dabei kann der Gipsschaum volumenhaltig verarbeitet werden, d. h. der Schaum dehnt sich weder beim Aushärten zu sehr aus (kein aufquellen), noch zeigt er Schwinden nach dem Aushärten (keine Schwindrisse). Gipsmischungen verhalten sind entsprechend. Bei anderen Bindemitteln ist das Quell- und Schwindverhalten grundsätzlich anders, wobei negative Effekte durch das Porengefüge aber zumindest gemindert werden.

Die Dichte der geschäumten Baustoffmaische und damit der Endprodukte kann in weiten Grenzen eingestellt werden. Hierdurch kann der Leichtgips nach der Erfindung in praktisch jeder gewünschten Dichte hergestellt werden. Es wurden Feuchtgewichte zwischen etwa 90 kg/m³ und 1.700 kg/m³ hergestellt und erprobt.

Die mit dem erfindungsgemäßen Mittel erhaltenen geschäumten Baustoffmaischen sind auch bei Temperaturen bis zu 0° Celsius verarbeitbar und verfügen über hervorragende thermische Isoliereigenschaften und, trotz ihrer geringen Dichte, über sehr gute Schallisoliereigenschaften.

Für Gips ergeben sich besonders gute und stabile Leichtgips bei Gipsschaumdichten von 450 bis 850 kg/m³.

### Detaillierte Beschreibung der Erfindung

Im Folgenden wird die Erfindung anhand von Rezeptur- und Verfahrensbeispielen illustriert. Diese sollen allein zur besseren Veranschaulichung der Erfindung dienen und diese nicht in ihren allgemeinen Aspekten beschränken.

### Rezepturbeispiele - Schäumungsmittel:

**Beispiel Schäumungsmittel 1**

| | |
|---|---|
| 18,0 | Gew.% anionisches Tensid, Natrium C14-16-Olefinsulfonat |
| 2,0 | Gew.% Fettalkohol, C12-C14 Mix 50:50 |
| 18,0 | Ges.% Butyldiglykol (Diethylenglycolmonobutylether) |
| 6,0 | Gew.% Melflux PCE 239 L/35% N.D. (BASF) |
| 56,0 | Gew.-% Wasser |
| 100 | % Gesamtlösung |

**Beispiel Schäumungsmittel 2**

| | |
|---|---|
| 12 | Gew.% anionisches Tensid, Natrium C14-16-Olefinsulfonat |
| 15,0 | Gew.% Schwefelsäureestersalz |
| 2,0 | Gew.% Fettalkohol, C10-C12 Mix 25:75 |
| 18,0 | Gew.% Hexylenglykol |
| 6 | Gew.% MELFLUX PCE 1493 L/40% (BASF) |
| 47,0% | Gew.-% Wasser |
| 100 | % Gesamtlösung |

**Beispiel Schäumungsmittel 3 (Konzentrat)**

| | |
|---|---|
| 40,0 | Gew.% anionisches Tensid, Natrium C14-16-Olefinsulfonat |
| 3,0 | Gew.% Fettalkohol, C12-C14 Mix 50:50 |
| 34,0 | Gew.% Butyldiglykol |
| 8, 0 | Gew. % PCE, MEFLUX PCE 239 L/35% (BASF) |
| | 15,0 Gew.-% Wasser |
| 100 | % Gesamtkonzentrat, verdünnbar mit 2 - 22 l Wasser je Liter Konzentrat |

Schäume aus diesen Schäumungsmitteln werden mit verschiedenen Bindemittelleimen oder -maischen zu geschäumten Baustoffmaischen gemischt.

Ein Baustoffleim wird in üblicher Weise hergestellt. Es können beispielsweise die im u.a. Beispiel 1 oder 2 genannten Zusammensetzungen gewählt werden. Die exakte Feststoffzusammensetzung und der Wassergehalt richten sich nach dem Anwendungszweck des herzustellenden geschäumten Maische. Dementsprechend werden die Art und Menge der gewählten Zuschläge und Zusammensetzung des Bindemittelmixes gewählt. Abhängig von der gewünschten Dichte werden pro Kilo Maische unterschiedliche Mengen des Schäumungsmittels nach den Rezepturbeispielen für die Schäumungsmittel eingesetzt.

### Beispielmischung 1 Gipsleim:

40 Gew.% (des Bindemittelgewichts) Anmachwasser, Die gewünschte Menge an Alpha Halbhydrat, 2% Verzögerer

### Beispielmischung 2 Zementleim:

50 Gew.% (des Bindemittels) Anmachwasser, die gewünschte Menge an CEM I 42,5 Portlandzement, 2,0 Gew. % Fliessmittel Melaminsulfonat

### Beispiele Anwendungen:

ANWENDUNG 1: Herstellung einer Gipsplatte zur Innendämmung. Gewünschte Feuchtdichte = 450 kg/m³, eingesetztes Bindemittel: Gips, Alpha-Halbhydrat inkl. Verzögerer, Zuschläge: keine.
Zur Herstellung eines Kubikmeters geschäumter Gipsmaische, die nach Aushärtung an der Raumluft im Trocknungsbehälter die gewünschte Dichte erreicht, werden 450 kg Gipsleim benötigt. Laut Beispiel 1 enthalten 450 kg Gipsleim 321kg Gips und 129 Liter Wasser. Gips hat eine Dichte von 1,7. 321 kg Gips haben damit ein Volumen von 189 Litern. Zusammen mit dem Wasser ergibt sich ein Volumen von 318 Liter. Das zu einem Kubikmeter verbleibende Volumen von 682 Litern wird mit Schaum aus Beispiel Schäummittel 1 aufgefüllt und mit dem Leim zu einem Kubikmeter geschäumter Gipsmaische vermischt.

ANWENDUNG 1a: Herstellung einer Leichtbetonplatte zur Außendämmung. Gewünschte Feuchtdichte = 350 kg/m³, eingesetztes Bindemittelleim gemäß Beispielmischung 2.
Zur Herstellung eines Kubikmeters geschäumter Maische, die nach Aushärtung an der Raumluft im Trocknungsbehälter die gewünschte Dichte erreicht, werden 350 kg Zementleim benötigt. Laut Beispielmischung 1 enthalten 350 kg Zementleim 233kg Zement und 117 Liter Wasser. Zement hat eine Dichte von 3,1. 233 kg Zement haben damit ein Volumen von 75 Litern. Zusammen mit dem Wasser ergibt sich ein Volumen von 192 Liter. Das zu einem Kubikmeter verbleibende Volumen von 808 Litern wird mit Schaum aus Beispiel Schäummittel 1 aufgefüllt und mit dem Leim zu einem Kubikmeter geschäumter Maische vermischt.

ANWENDUNG 2: Herstellung einer Ausgleichsmasse zum Flüssigeinbau auf der Baustelle unterhalb des Estrichs. Gewünschte Dichte = 600 kg/m³, gewünschte Festigkeit 1,5 N/mm², eingesetztes Bindemittel: Gips, natürliches Anhydrit, Zuschläge: 20 Gew.-%% Kies gemahlen mit geringer Körnung, Anreger Kallumsulfat 2,0 Gew. % des Bindemittels.
Zur Herstellung einer geschäumten Gipsmaische, die am Verbaupunkt an der Raumluft aushärtet, werden 480 kg Anhydrit mit einer Dichte von 2,2 und einem Volumen von 218l benötigt. Die Zuschläge besitzen eine Dichte von 2,7 und somit ein Volumen von 45 Litern, so dass 737 Liter Schaum für einen Kubikmeter Ausgleichsmasse benötigt werden. Es werden 2 Liter Konzentrat laut Beispiel Schäumungsmittel 3 in das Anmachwasser gegeben und die Gesamtmischung in einem Intensivmischer zur geschäumten Maische gemischt.

ANWENDUNG 3: Herstellung einer Tragschicht im Wegebau, bei deren Einsatz auf sämtliche Schichten und Elemente unterhalb der abdeckenden Asphaltschicht verzichtet werden kann.
Gewünschte Dichte. 850 kg/m³, gewünschte Druckfestigkeit: 3,5 N/mm², eingesetztes Bindemittel: Portlandzement, CEM I 42,5 N.
Zur Herstellung einer geschäumten Betonmaische, die am Verbaupunkt aushärtet werden 565 kg Zement mit einer Dichte von 3,1 und einem Volumen von 182 Litern benötigt. Zusammen mit dem Volumen des Anmachwassers von 283 l ergibt sich ein Volumen von 465 Litern, dass mit 535 Litern Schaum, der aus Beispiel Schäumungsmittel 2 hergestellt wurde mit der Maische vermischt wird und das gewünschte Material ergibt.

ANWENDUNG 4: Herstellung eines Leichtgipsputzes für den Innenbereich einer Außenwand, dessen Luftporen das Material mit einem Wärmedämmwert ausstatten. Bei der Berechnung des U-Wertes eines Wandaufbaus kann dieser Wert eingerechnet werden und so helfen den Gesamtwandaufbau reduzieren. Zusätzlich ist die Verarbeitbarkeit des Leichtgipsputzes im Vergleich zum Standardputz aufgrund seines geringen Gewichts vereinfacht und die Reichweite des eingesetzten Rohmaterials wird erheblich vergrößert.
Gewünschte Dichte = 750 kg/m³, eingesetztes Bindemittel: Gips, Alpha-Halbhydrat, (Baumarkt- oder Baustofflieferantenübliche) Sackware 25kg, Zuschläge: keine.
Zur Herstellung eines Leichtgips aus geschäumter Gipsmaische, der nach Aushärtung an der Raumluft im Trocknungsbehälter die gewünschte Dichte erreicht, werden 25 kg Gips (Sackware) mit 10 Litern Wasser zu Gipsleim vermischt. Gips hat eine Dichte von 1,7, woraus sich für 25 kg Gips ein Volumen von 15 Litern ergibt. Zusammen mit dem Wasser ergibt sich ein Volumen von 25 Litern.

Alternative 1: Der Leim wird mit 25,5 Litern Schaum gemäß Beispiel Schäumungsmittel 1 zu einer geschäumten Maische vermischt, wobei der Schaum vorab in einem Standardschaumgenerator z.B. FINKE hergestellt und dann eingemischt wird.

Alternative 2: Dem Feststoff oder dem Anmachwasser wird das Schäummittelkonzentrat in getrockneter oder pastöser Form zugegeben und die Mischung wird in einem Intensivmischer aufgeschäumt. Hierzu werden 1,0 g Pulver (hergestellt aus Beispiel Porenbildner 3) auf 25kg Gips gegeben.

### FIGURENBESCHREIBUNG

In der Zeichnung zeigen:
- Fig. 1: schematischer Ablauf einer Leichtbaustoffherstellung auf der Baustelle oder in der industriellen Fertigung;
- Fig. 2: schematischer Ablauf der Herstellung von Leichtbaustoff in etwas geänderter Verfahrensführung;
- Fig. 3: schematischer Ablauf der Herstellung von Leichtbaustoff unter Verwendung eines getrockneten Schäumungsmittels.

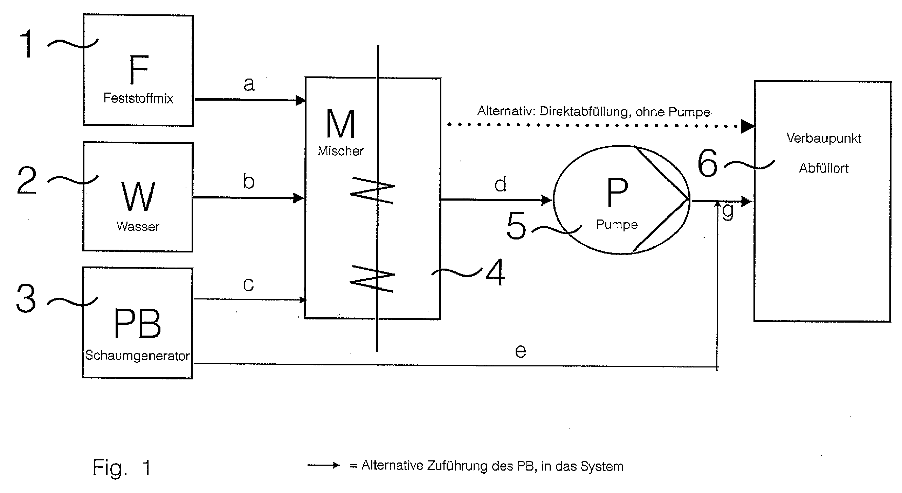

Figur 1 zeigt einen ersten Verfahrensablauf zur Herstellung einer geschäumten Baustoffmaische, aus der nach Trocknung Leichtbaustoffprodukte (z.B. Leichtgipsprodukte) entstehen oder hergestellt werden. Die erforderlichen Ausgangsstoffe werden aus Vorratsbehältern 1, 2 und 3 einem Standardmischer 4 zugeführt. Es können die verschiedensten Mischertypen verwendet werden. Jedoch sollte die Mischintensität variabel einstellbar sein, damit je nach eingesetzter Variante des Schäumungsmittels und eingesetztem Feststoffmix in der Maische die gewünschte Dichte (das gewünschte Porenvolumen) erreicht wird.

Das Bindemittel wird in dem Behälter 1 trocken vorgelegt. Es kann Zuschläge enthalten. Dieser Feststoffmix wird über eine Leitung a in den Mischer 4 gefördert. Alternativ können Bindemittel und Zuschläge in zwei getrennten Vorrats- und Abgabebehältern vorgehalten werden, die beide über getrennte Leitungen mit dem Mischer verbunden wären (hier nicht gezeigt). Parallel hierzu wird das Anmachwasser aus Behälter 2 über eine Leitung b in den Mischer 4 gefördert. Schäumungsmittel wird in Behälter 3 vorgelegt und über eine Leitung c in den Mischer 4 gefördert. Alternativ kann das Schäumungsmittel (Porenbildner, PB) mit einem Schaumgenerator hergestellt und direkt in Mischer 4 gefördert werden. In dem Mischer 4 wird ein Bindemittelleimschaum erzeugt, der über eine Zuführung d in eine Pumpe 5 geleitet und weiter über einen Schlauch g zu einem Verbaupunkt 6 auf einer Baustelle oder in eine Form geleitet wird. Alternativ kann der Schaum, der mit Hilfe des Schaumgenerators hergestellt wurde unmittelbar über eine Leitung e in den Bindemittelleim oder in dem Fall, dass Zuschläge enthalten sind, in die Baustoffmaische geleitet werden. Hierfür wird der Schaum aus Leitung e unter Druck in den Leimstrahl des unverschäumten Bindemittelleims oder der unverschäumten Baustoffmaische injiziert.

Diese Beigabe per Injektion in den Leimstrahl ist bei kontinuierlichem Herstellprozess bevorzugt. Mit der geschäumten Maische können Formen befüllt werden in denen die Maische abbindet, was in dieser schematischen Darstellung nicht näher ausgeführt ist.

Die Überführungsleitung g kann ein flexibler Schlauch sein, mit denen die geschäumte Maische an einem Verbaupunkt eingebracht wird. Wobei Verwendungen der Maische als Dämmmaterial in Zwischenwände, als Putz, als Bodenausgleichsmasse oder als Estrich möglich sind.

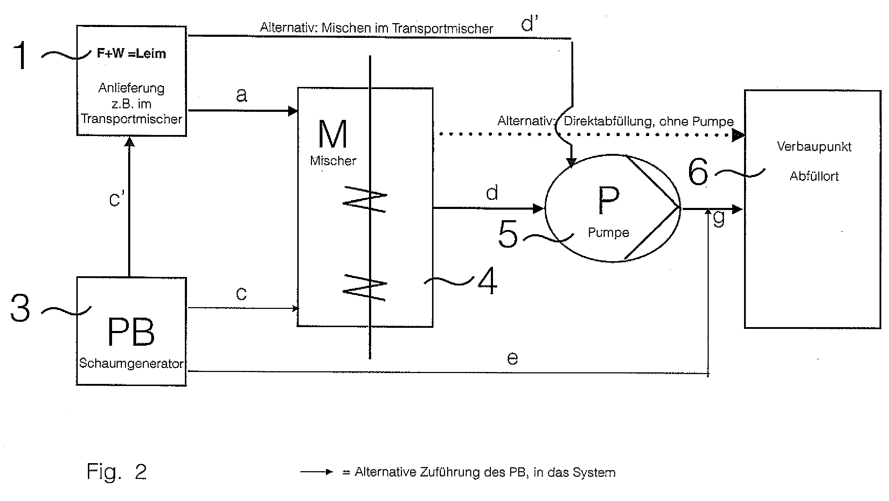

Figur 2 zeigt ein abgewandeltes Verfahren. Dabei wird in Behälter 1 unmittelbar ein zuvor erzeugter Bindemittelleim vorgelegt oder der Leim wird direkt aus dem Transportmischer über Leitung d' dem Mischer 4 zugeführt in dem die geschäumte Maische erzeugt wird. Alternativ kann der Schaum über Leitung c' dem Transportmischer beigeführt werden, wobei der Transportmischer die Funktion von Mischer 4 erfüllt und diesen ersetzt. Die beiden Komponenten Bindemittelleim und Schaum werden im Mischer 4 oder im Transportmischer gemischt und es bildet sich ein Bindemittelleimschaum, der unter den Mischbedingungen stabil bleibt, wie in dem Verfahren zu Figur 1. Aus dem Mischer 4 (über Weg d) oder aus dem Transportmischer (über Weg d') wird der fertige Bindemittelleimschaum mittels der Pumpe 5 durch Schlauch g zum Verbaupunkt 6 oder in eine Form verbracht. Zuschläge können zuvor aus einem separaten Behälter unmittelbar in den Mischer 4 oder den Transportmischer gegeben worden sein. Die geschäumte Baustoffmaische wird wie ein Leim über die Leitung d, Pumpe 5 und Leitung/Schlauch g zum Verbaupunkt 6 gebracht oder direkt vom Transportmischer am Verbaupunkt abgelassen.

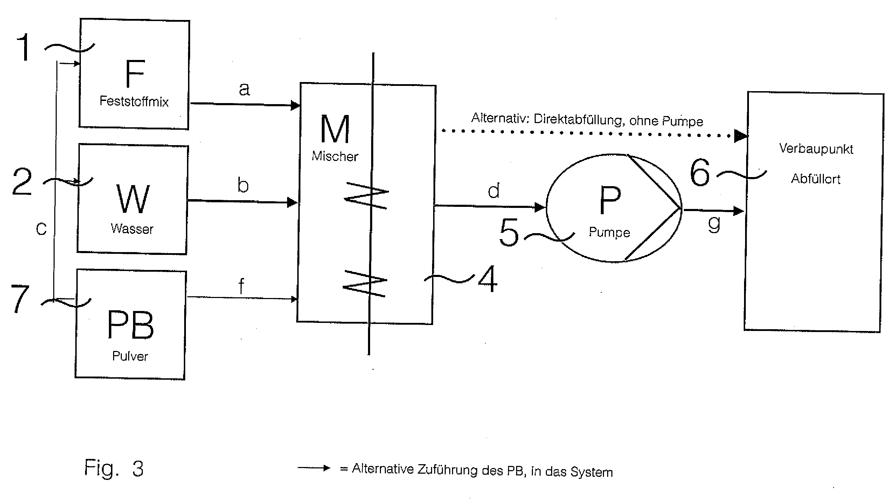

Figur 3 zeigt ein Beispiel für eine Verfahrensführung, bei der ein pulverförmiges, trockenes Schäumungsmittel eingesetzt wird. Wiederum ist ein Feststoffmix, d.h. Bindemittel und ggf. Zuschläge, in Behälter 1 vorgelegt. In Behälter 2 befindet sich Anmachwasser. Behälter 7 enthält nun das trockene, beispielsweise gefriergetrocknete Schäumungsmittel, das über Leitung c dem Bindemittel in Behälter 1 und/oder dem Anmachwasser in Behälter 2 zugegeben wird. Über den Materialstrom wird das pulverförmige Schäumungsmittel dem Mischer 4 zugeführt oder es wird direkt dem Mischer 4 zugegeben (hier schematisch Weg f). In dem Mischer 4 wird ein Bindemittelleimschaum oder eine geschäumte Baustoffmaische hergestellt, die wie zu den vorausgegangenen Figuren schon beschrieben über die Leitungen d und g mittels Pumpe 5 zum Verbaupunkt 6 oder in eine Form transportiert wird.

### TESTS

Zur Herstellung eines Gipsleims wird ein Alpha-Halbhydrat (Südanit) oder ein Anhydrit (Raddipur +) der Südharzer Gipswerke und Leitungswasser verwendet. Aus einer Mischung gemäß Rezepturbeispiel 2 wurde mit einem 2-Pumpen-Schaumgenerator (Fa. Finke, Detmold) ein Schaum hergestellt.

Grundsätzlich ist die Beigabe des Schaums jederzeit vor dem Ansteifen des Gipsleims möglich, sollte aber möglichst zeitnah zur Leimherstellung erfolgen. Der Leim muss in ungehärtetem Zustand verbleiben, um eine Vermischung mit dem Schaum zu ermöglichen.

Grundsätzlich kann Leichtgips in verschiedener Dichte hergestellt werden. Für diese Tests wurden die Dichteklassen 450 kg/m³ und 850 kg/m³ ausgewählt.

### Tests: 1. Pumpen

Der Leim oder die Maische kann mit allen derzeit im Markt verfügbaren Pumpenarten gefördert werden, für geschäumte Maischen sind Schlauch- und Schneckenpumpen geeignet. Die Vielzahl der verfügbaren Pumpprinzipien und die Variablen Schaumbeigabepunkte erfordern einen praktischen Test der gewählten Pumpe, ob mit dieser das gewünschte Ergebnis erreicht werden kann.

Es ist unerheblich, ob die Pumpen im Batch-Verfahren hergestelltes Material befördern oder die Materialherstellung kontinuierlich erfolgt.

Es ist unerheblich, ob der Leichtgips vorab hergestellt, in der Pumpe oder direkt hinter der Pumpe im Förderschlauch/-rohr oder im wartungsarmen oder wartungsfreien Verwirbler/Mischerelement hergestellt wird. Es ist aber zu beachten, dass Kolbenpumpen die Poren geschäumter Maischen zerstören können.

### Tests: 2. Volumenstabilität

Das poresierte bzw. aufgeschäumte Feststoff-Wasser-Gemisch (Leim) ist bis über 75 Meter pumpfähig und verträgt Aufbauhöhen (flüssig gegossen) von über 100 cm. Dabei bleibt das Material volumenstabil mit unverändert homogen verteilten Luftporen. Die Luftporen haben zu 99% eine einheitliche Größe ≥ 2 mm. Größere Poren treten nur auf, wenn beim Abfüllen, Pumpen oder Aufbringen die Bewegung des Leims Lufteinschlüsse erlaubt (Übergießen, schwappen, etc.). Diese größeren Poren haben keinen negativen Einfluss auf das Gesamtporengefüge, wen Ihr Anteil am Volumen unter 2% liegt.

### Tests: 3. Zuschlagsstoffe / -gehalt

Versuche haben ergeben, dass jeder gips- oder zementbasierte Leim poresiert werden kann, wenn dem Leim keine Chemie beigemischt ist, die den Porenbildner neutralisiert oder anderweitig seiner Eigenschaft beraubt. Der Mindestgehalt an Bindemitteln sollte dabei 12,5 % der gesamten Feststoffmasse nicht unterschreiten.

Zu beachten ist, dass die durchschnittlichen Druck- und Zugfestigkeiten bei geschäumten Baustoffmaischen generell geringer ausfallen als bei unverschäumten Gipsmischungen.

### Referenzmischungen

Für die Mischungen gemäß nachfolgender Tabelle gilt folgendes. Alle Mischungen am Beispiel Gips:
a- Mischung Nr. 1 (Referenzmischung), ohne Poresierung
b- Mischung Nr. 2, Leichtgips, Dichte 850 kg/m³
c- Mischung Nr. 3, Leichgips, Dichte 500 kg/m³

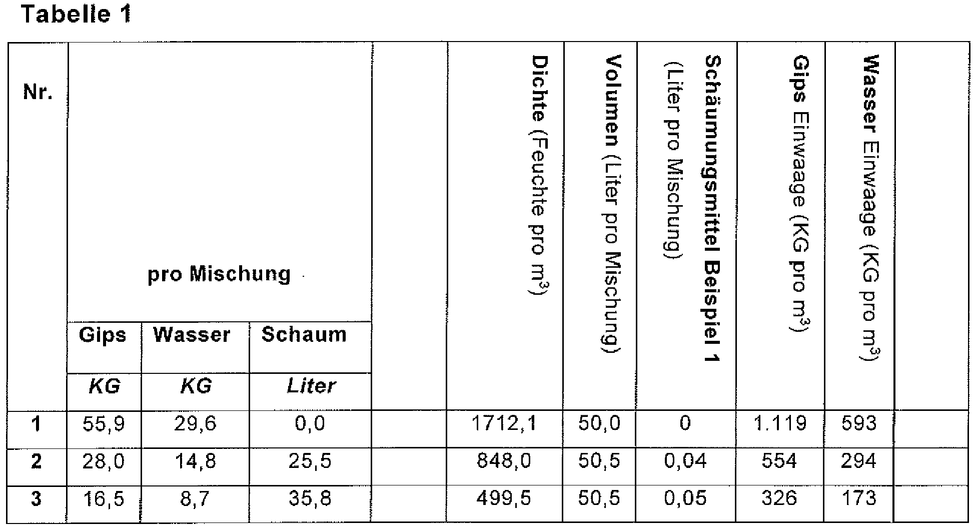

Zur Herstellung eines Kubikmeters Leichtgips werden folgende Mengen Gips (hier Alphahalbhydrat) benötigt:
- a-: 1.119 kg Gips
- b-: 554 kg Gips
- c-: 326 kg Gips

Zur Herstellung eines Kubikmeters Leichtgips werden folgende Mengen Wasser (hier Leitungswasser) benötigt:
- d-: 29,8 kg Wasser
- e-: 14,8 kg Wasser
- f-: 8,7 kg Wasser

Es können von 50% bis 125% der angegebenen Wassermengen verwendet werden, ohne dass das Leichtgipsgefüge Schaden nimmt. Geringere oder höhere Mengen an Wasser sind möglich, werden aber aufgrund auftretender negativer Schwindeffekte (mehr Wasser als 125%) und evtl. zu hoher Zähigkeit und zu schnelles Aushärten für den gewünschten Prozess (weniger als 50% Wasser) nicht empfohlen.

Zur Herstellung eines Kubikmeters Leichtgips werden rechnerisch folgende Mengen an Porenbildnern benötigt (sofern ein Schaumgenerator der Fa. Finke verwendet wird):
- a-: 0,00 Liter
- b-: 0,75 Liter
- c-: 1,00 Liter

Die Referenzmischungen können mit allen denkbaren Feststoffmischungen durchgeführt werden. Bei der Berechnung von Schaumvolumen und benötigten Mengen an Porenbildnern ist die unterschiedliche Dichte des Feststoffs zu beachten.

### II. Leichtgipsherstellung durch Zuführung des Schäumungsmittels zum Mischwasser bei der Gipsleimherstellung

Zur Herstellung des Gipsleims wird ein Alphahalbhydrat der Südharzer Gipswerke und Leitungswasser verwendet. Der Gipsleim wird in einem 150l-Mischer der Fa. EMT angesetzt. Es wird ein Schaum aus unverdünntem Schäumungsmittel nach Beispiel Schäumungsmittel 1 zum Mischwasser zugegeben.

Zur Herstellung eines Kubikmeters Leichtgips werden rechnerisch folgende Mengen an Schäumungsmittel benötigt:
- a-: 0,00 Liter
- b-: 0,20 Liter
- c-: 0,35 Liter

Vergleichstests: Wurden hingegen Schäumungsmittel ohne PCE hergestellt, so ergab sich keine Prozesssicherheit. Die Schäume aus den Schäumungsmitteln fielen innerhalb von Sekunden bis Minuten zusammen, konnten nicht mit hinreichend konstantem Volumen gepumpt werden und zeigten auch beim Aushärten keine Volumenstabilität.

## Patentansprüche

1. Verwendung eines lang- oder mittelkettigen Polycarboxylatethers (PCE) zur Stabilisierung eines Schaums aus einem Schäumungsmittel für Baustoffe auf der Basis ionischer schäumender Tenside zur Herstellung porenhaltiger Leichtbau- und Dämmmaterialien.

2. Verwendung nach Anspruch 1, **dadurch gekennzeichnet, dass** der Gehalt des Polycarboxylatethers (PCE) in dem noch nicht mit einer Baustoffkomponente vereinigten Schäumungsmittel wenigstens 0,1 Gew.-% beträgt.

3. Verwendung nach Anspruch 1 oder 2, **dadurch gekennzeichnet, dass** der Polycarboxylatether (PCE) in Kombination mit wenigstens einem Glykol und wenigstens einem Fettalkohol eingesetzt wird.

4. Schäumungsmittel für das Schäumen eines Baustoff-Bindemittelleims oder einer Baustoffmaische zur Herstellung porenhaltiger Leichtbau- und Dämmmaterialien, **bestehend aus** einer schaumbildenden ionischen TensidKomponente, wenigstens einem Fettalkohol und wenigstens einem Polycarboxylatether zur Stabilisierung in einem wässrig-organischen Lösemittel, wobei das organische Lösemittel ausgewählt ist aus der Gruppe Alkylglykole, Alkylenglykole bis C6-Alkyl, Diglykole und Diglykolether, sowie optional bis maximal 20 Gew.-% der Mischung an weiteren Inhaltsstoffen.

5. Schäumungsmittel nach Anspruch 4, bestehend aus:
a) wenigstens 2 Gew.-% (Substanzgehalt) an ionischem schaumbildendem Tensid,
b) wenigstens 10 Gew.-% Lösemittel aus der Gruppe Alkylglykole, Alkylenglykole bis C6-Alkyl, Diglykole und Diglykolether,
c) wenigstens 0,1 Gew.-% (Substanzgehalt) Polycarboxylatether (PCE),
d) wenigstens 0,5 Gew.-% Fettalkohol,
e) wenigstens 10 Gew.-% Wasser und
f) 0 - 20 Gew.-% anderer organisch-chemischer Zusatzstoffe und/oder organischer oder anorganischer Säuren oder Basen zur pH-Wert-Einstellung, wobei die Mischung insgesamt 100 Gew.-% ergibt.

6. Schäumungsmittel nach Anspruch 4 oder 5, **dadurch gekennzeichnet, dass** es mit zusätzlichem Wasser auf sein bis zu 25faches Volumen verdünnt ist.

7. Schäumungsmittel nach einem der Ansprüche 4 bis 6, **dadurch gekennzeichnet, dass** es in einer durch Gefriertrocknung oder Vakuumeindampfung des Schäumungsmittels erhältlichen pastösen oder pulverförmigen festen Form vorliegt.

8. Verfahren zur Herstellung eines porenhaltigen Leichtbau- und Dämmmaterials mit Hilfe eines Bindemittelleimschaums oder einer geschäumten Baustoffmaische, **dadurch gekennzeichnet, dass** das Schäumungsmittel nach Anspruch 4, optional mit zusätzlichem Wasser, aufgeschäumt und der so erhaltene Schaum mit Anmachwasser für ein Bindemittel, mit einem Bindemittelleim aus Bindemittel und Anmachwasser sowie optional Additiven oder mit einer Baustoffmaische aus dem Bindemittelleim und Zuschlägen vereinigt wird, um den Bindemittelleimschaum oder die geschäumte Baustoffmaische zu ergeben.

9. Verfahren nach Anspruch 8, **dadurch gekennzeichnet, dass** der Schaum aus dem Schäumungsmittel innerhalb eines Bindemittelleim-Zubereitungsverfahrens wenigstens einem der Ausgangsstoffe in einem Behälter oder in eine Überführungsleitung, in einen Mischer oder Schaumgenerator, in eine Pumpe oder in eine Frischbaustoff-Abgabeleitung zugeführt wird.

10. Verfahren zur Herstellung eines porenhaltigen Leichtbau- und Dämmmaterials mit Hilfe eines Bindemittelleimschaums oder einer geschäumten Baustoffmaische, **dadurch gekennzeichnet, dass** das Schäumungsmittel nach Anspruch 6 dem trockenen Bindemittel oder dem Anmachwasser zugegeben wird und dass der Bindemittelleimschaum beim Mischen des Bindemittels mit dem Anmachwasser erzeugt und in üblicher Weise weiterverarbeitet wird.

11. Verfahren nach einem der Ansprüche 8 bis 10, **dadurch gekennzeichnet, dass** das Bindemittel aus Zement, Gips, Kalk, jeweils allein oder in beliebiger Mischung untereinander oder mit anderen mineralischen Bestandteilen besteht.

12. Verfahren nach einem der Ansprüche 8 bis 11, **dadurch gekennzeichnet, dass** der Bindemittelleimschaum oder die geschäumte Baustoffmaische vor dem Abbinden und Aushärten an den Verbaupunkt transportiert wird, vorzugsweise gepumpt wird, oder alternativ in eine Form gegossen wird und dort aushärtet.

13. Verfahren nach Anspruch 12, **dadurch gekennzeichnet, dass** das Aushärten in der Form im Verbund mit anderen Materialien geschieht.

14. Verfahren nach Anspruch 12 oder 13, **dadurch gekennzeichnet, dass** das Ausformen und Aushärten unter Druck und erhöhter Temperatur in einem Autoklaven erfolgt.

15. Verfahren nach einem der Ansprüche 8 bis 14, **dadurch gekennzeichnet, dass** das mit dem Verfahren erhaltene geformte oder frei gegossene Leichtbau- und Dämmmaterial zu Porenleichtbauprodukten geschnitten, gesägt oder gefräst wird.

16. Porenleichtbauprodukte, insbesondere Bauelemente, erhältlich mit dem Verfahren nach einem der Ansprüche 8 bis 15.
